# EUROPÄISCHE PATENTSCHRIFT

(11) **EP 1 634 252 B1**
(45) Veröffentlichungstag und Bekanntmachung des Hinweises auf die Patenterteilung: **19.08.2009**
(21) Anmeldenummer: 04735235.6
(22) Anmeldetag: 28.05.2004
(51) Int. Cl.: G07F 7/10, G06K 19/073

(54) **VERFAHREN ZUM LADEN VON TRAGBAREN DATENTRÄGERN MIT DATEN**
METHOD FOR LOADING PORTABLE DATA CARRIERS WITH DATA
PROCEDE DE CHARGEMENT DE SUPPORTS DE DONNEES PORTATIFS, EN DONNEES

(30) Priorität: 03.06.2003 DE 10324995
(43) Veröffentlichungstag der Anmeldung: 15.03.2006
(73) Patentinhaber: Giesecke & Devrient GmbH, 81677 München (DE)
(72) Erfinder: FLAMMENSBÖCK, Christian, 86529 Schrobenhausen (DE); PATZKE, Hagen, 81735 München (DE); EBNER, Claus, 80995 München (DE)
(74) Vertreter: Klunker . Schmitt-Nilson . Hirsch
(86) Internationale Anmeldenummer: PCT/EP2004/005822
(87) Internationale Veröffentlichungsnummer: WO 2004/107282

(56) Entgegenhaltungen:
- WO-A-00/07154
- WO-A-01/95271
- DE-A- 10 142 351
- US-A1- 2002 047 049
- W. RANKL, W. EFFING: "Handbuch der Chipkarten, 4.Auflage, Kap. 10.3, 10.4 Lebenszyklus einer Chipkarte" 29. August 2002 (2002-08-29), HANSER VERLAG , MÜNCHEN 220364 , XP002300685 Seite 638 - Seite 656

## Beschreibung

Die Erfindung betrifft ein Verfahren zum Laden von tragbaren Datenträgern mit Daten.

Tragbare Datenträger, insbesondere Chipkarten, können vielfältig eingesetzt werden, etwa zur Abwicklung von Transaktionen des Zahlungsverkehrs, als Ausweisdokumente bei Zugangskontrollen, als Berechtigungsnachweis zur Nutzung eines Mobilfunksystems usw. Bevor ein tragbarer Datenträger bei einer Anwendung eingesetzt werden kann, ist es in der Regel erforderlich, im Rahmen einer Initialisierung und einer nachfolgenden Personalisierung Daten in einen nichtflüchtigen Speicher des tragbaren Datenträgers zu laden. Bei der Initialisierung werden beispielsweise Ergänzungen eines Betriebssystems des tragbaren Datenträgers, das in einem Permanentspeicher des tragbaren Datenträgers gespeichert ist, in den nichtflüchtigen Speicher eingeschrieben und Dateistrukturen angelegt. Weiterhin wird die nachfolgende Personalisierung vorbereitet. Soweit die Möglichkeit dazu besteht, werden die Daten unter äußerer Vorgabe von physikalischen Speicheradressen in den nichtflüchtigen Speicher eingeschrieben, um die für das Einschreiben benötigte Zeit möglichst gering zu halten. Ein möglichst schnelles Einschreiben wird deshalb angestrebt, da mit einer Zunahme der Zeit, die für das Einschreiben der Daten benötigt wird, in der Regel auch die Kosten für die Initialisierung bzw. Personalisierung zunehmen.

Bei der Personalisierung werden im nichtflüchtigen Speicher zum Beispiel Anwendungen installiert und personenbezogene Daten eingeschrieben, wobei die physikalischen Speicheradressen in der Regel nicht bekannt sind. Deshalb werden die Daten ohne äußere Vorgabe der physikalischen Speicheradressen in den nichtflüchtigen Speicher eingeschrieben und es wird jeweils vom tragbaren Datenträger entschieden, welche Daten in welcher Form unter welcher physikalischen Adresse abgelegt werden. Dadurch lässt sich beispielsweise ein Überschreiben von noch benötigten Speicherplätzen zuverlässig verhindern, da die Speicherplatzbelegung innerhalb des tragbaren Datenträgers zu jedem Zeitpunkt bekannt ist. Allerdings ist bei dieser Vorgehensweise bei großen Datenmengen ein hoher Zeitaufwand für das Einschreiben in den Speicher erforderlich.

Eine mögliche Realisierung des Einschreibens von Daten in eine Chipkarte mit und ohne äußere Vorgabe der physikalischen Speicheradressen ist aus der WO 00/52635 bekannt. Dort wird vorgeschlagen, zur Reduzierung der für das Einschreiben von Personalisierungsdaten in eine Chipkarte benötigten Zeit die Chipkarte mit einer gesonderten Speicherschnittstelle auszurüsten. Die gesonderte Speicherschnittstelle ist mit den externen Anschlüssen des Chips elektrisch leitend verbunden, so daß der Speicher unter Umgehung des Mikroprozessors der Chipkarte direkt zugänglich ist. Über Schaltmittel, die in eine Speichersteuerlogik des Speichers integriert sind, kann zwischen einem direkten Ladebetrieb und einem vom Mikroprozessor unterstützten Ladebetrieb umgeschaltet werden. Bei dem vom Mikroprozessor unterstützten Ladebetrieb werden Daten asynchron bei einer vom Mikroprozessor vorgegebenen Taktfrequenz von einer Personalisierungseinrichtung an den Mikroprozessor übertragen und unter Mitwirkung des Mikroprozessors in den Speicher geschrieben. Bei dem direkten Ladebetrieb werden die Daten direkt von der Personalisierungseinrichtung in den Speicher geladen, wobei die Datenübertragung synchron bei einer durch die Personalisierungseinrichtung vorgegebenen Übertragungsfrequenz erfolgt.

Mit dem direkten Ladebetrieb lassen sich die Personalisierungszeiten, verglichen mit dem vom Mikroprozessor unterstützten Ladebetrieb, zwar prinzipiell erheblich verkürzen. Voraussetzung hierfür ist aber, daß jeweils im einzelnen bekannt ist, wie der Speicher mit den einzuschreibenden Daten belegt werden soll. Die physikalische Speicherbelegung kann aber in der Regel von der Personalisierungseinrichtung nicht frei vorgegeben werden, sondern hängt beispielsweise vom jeweils vorgesehenen Personalisierungsprofil ab. Um den direkten Ladebetrieb anwenden zu können, müßte somit für jedes Personalisierungsprofil eine eigene Personalisierungsprozedur bereitgestellt werden und bei der Personalisierung jeweils eine dieser Personalisierungsprozeduren aufgerufen werden. Dies würde einen sehr hohen Aufwand erfordern. Außerdem sind in der Regel auch innerhalb desselben Personalisierungsprofils zumindest einige der Personalisierungsdaten für verschiedene Chipkarten inhaltlich verschieden, wodurch zusätzliche Schwierigkeiten entstehen. Die praktische Anwendung des direkten Ladebetriebs bei der Personalisierung von Chipkarten ist daher mit großen Problemen verbunden.

Wie in "Handbuch der Chipkarten", Wolfgang Rankl/Wolfgang Effing, 4. Auflage (2002) S. 645-648 erwähnt und was den Oberbegriff der unabhängigen Ansprüche bildet, ist es zwar prinzipiell möglich, die Chipkarte zur Ermittlung der physikalischen Speicheradressen mittels geeigneter Simulationsprogramme nachzubilden. Angesichts des dafür erforderlichen hohen Aufwands ist diese Vorgehensweise allerdings nur sehr bedingt geeignet. Es wird daher in demselben Dokument vorgeschlagen, eine Chipkarte, die in einem ansonsten nicht benutzten Speicherbereich ein Dump-Programm enthält, mittels logischer Kommandos, d. h. ohne äußere Vorgabe der physikalischen Speicheradressen, zu initialisieren. Mit dem Dump-Programm wird anschließend der initialisierte Speicher ausgelesen und die erhaltenen Daten werden auf die physikalischen Adressen der zu initialisierenden Chipkarten geschrieben.

DE 199 39 290 A1 offenbart für Multiapplikationschipkarten ein Personalisierungskonzept, nach dem mit Hilfe von Anwendungsbeschreibungsdatensätzen einerseits und Personalisierungsbeschreibungsdatensätzen andererseits sichergestellt wird, daß eine - von mehreren -Chipkartenanwendung nur auf die ihr jeweils zugewiesenen Personalisierungsdatenfelder zugreifen kann.

DE 195 36 548 A1 offenbart weiterhin ein Personalisierungskonzept für Chipkarten mit einer Initialisierungsphase und einer nachfolgenden Personalisierungsphase, wobei die Personalisierung mit Hilfe von Personalisierungstabellen erfolgt. Gegenstand der Schrift ist vor allem die Erstellung von Werkzeugen für Initialisierung, Personalisierung und Kommunikation zu einer Chipkarte.

Aus der WO 01/95271 A1 ist ein Verfahren zur Personalisierung von Chipkarten bekannt, das von einem zu personalisierenden Anwendungsquelltext ausgeht. Die beschriebene Lösung beruht auf dem Ansatz, die Personalisierung der Anmeldung vollständig vor dem Aufbringen auf die Chipkarte vorzunehmen, um die Anwendung in einem einzigen Personalisierungsschritt auf eine Chipkarte bringen zu können. Vorgeschlagen wird, in dem Anwendungsquelltext Abschnitte mit Personalisierungsdaten bei der Programmerstellung geeignet zu markieren, die markierten Abschnitte mittels einer Erkennungseinrichtung zu identifizieren und in die identifizierten Abschnitte anschließend aus einer Datenbasis Personalisierungsdaten einzufügen. Die danach vorliegende personalisierte Anwendung wird kompiliert oder unmittelbar auf der Chipkarte interpretiert.

Der Erfindung liegt die Aufgabe zugrunde, den Zeit- und Kostenaufwand bei der Personalisierung von tragbaren Datenträgern zu verringern.

Diese Aufgabe wird durch ein Verfahren mit der Merkmalskombination des Anspruchs 1 bzw. Anspruchs 13 gelöst.

Beim erfindungsgemäßen Verfahren zum Laden von tragbaren Datenträgern mit Daten werden für mehrere tragbare Datenträger identische Allgemeindaten ohne äußere Vorgabe physikalischer Speicheradressen in einen nichtflüchtigen Speicher eines ersten tragbaren Datenträgers eingeschrieben. Danach wird ein Speicherinhalt wenigstens eines Teilbereichs des nichtflüchtigen Speichers des ersten tragbaren Datenträgers ausgelesen und unter Einbeziehung der zugehörigen physikalischen Speicheradressen wird ein Speicherabbild für diesen Teilbereich erzeugt. Schließlich wird das Speicherabbild unter Verwendung der zugehörigen physikalischen Speicheradressen in nichtflüchtige Speicher weiterer tragbarer Datenträger eingeschrieben. Die Besonderheit des erfindungsgemäßen Verfahrens besteht darin, daß jeweils nach dem Einschreiben des Speicherabbilds in den nichtflüchtigen Speicher eines der weiteren tragbaren Datenträger von diesem weiteren tragbaren Datenträger eine Rekonvertierungsroutine ausgeführt wird zur Rekonvertierung des mit dem Speicherabbild geladenen nichtflüchtigen Speichers.

Die Erfindung hat den Vorteil, daß mit einfachen Mitteln und ohne aufwendige Vorarbeiten sehr kurze Ladezeiten beim Laden der tragbaren Datenträger mit Daten erzielt werden. Trotzdem bestehen durch die erfindungsgemäß vorgesehene Rekonvertierungsroutine Gestaltungsmöglichkeiten im Hinblick auf die Belegung der nichtflüchtigen Speicher der tragbaren Datenträger.

Die Allgemeindaten können beispielsweise Anwendungssoftware, insbesondere JAVA Packages und JAVA Applets, beinhalten. Im Rahmen einer Initialisierung des ersten tragbaren Datenträgers können eine Leseroutine zum Auslesen des nichtflüchtigen Speichers oder für die Ausführung der Leseroutine zwingend benötigte Zusatzdaten in den nichtflüchtigen Speicher des ersten tragbaren Datenträgers eingeschrieben werden. Weiterhin kann im Rahmen der Initialisierung die Rekonvertierungsroutine in den nichtflüchtigen Speicher des ersten tragbaren Datenträgers eingeschrieben werden.

Das erfindungsgemäße Verfahren kann so angelegt sein, daß der Speicherinhalt des nichtflüchtigen Speichers des ersten tragbaren Datenträgers nur dann ausgelesen wird, wenn zuvor eine Sicherheitsprüfung erfolgreich durchgeführt wurde. Dadurch können ein unberechtigtes Auslesen und der potentiell damit verbundene Missbrauch verhindert werden. Aus den gleichen Gründen kann auch vorgesehen sein, daß der aus dem nichtflüchtigen Speicher des ersten tragbaren Datenträgers ausgelesene Speicherinhalt verschlüsselt wird. Weitere Sicherheitsvorkehrungen können darin bestehen, daß die Erzeugung des Speicherabbilds des nichtflüchtigen Speichers des ersten tragbaren Datenträgers nur einmal zugelassen wird und daß die Leseroutine zum Auslesen des nichtflüchtigen Speichers des ersten tragbaren Datenträgers oder die für die Ausführung der Leseroutine zwingend benötigten Zusatzdaten nach der Erzeugung des Speicherabbilds gelöscht werden. In der Regel wird das Speicherabbild jeweils erst vor dem Einschreiben in die nichtflüchtigen Speicher der weiteren tragbaren Datenträger entschlüsselt.

Die Rekonvertierung der nichtflüchtigen Speicher der weiteren tragbaren Datenträger kann jeweils datenträgerspezifisch durchgeführt werden. Auf diese Weise kann trotz der Verwendung des gleichen Speicherabbilds für alle weiteren tragbaren Datenträger jeweils eine individuelle Speicherbelegung erzeugt werden. Im Rahmen der Rekonvertierung der nichtflüchtigen Speicher der weiteren tragbaren Datenträger können beispielsweise Zufallszahlen erzeugt und gespeicherte Daten verschlüsselt werden. Nach der Rekonvertierung der nichtflüchtigen Speicher der weiteren tragbaren Datenträger können jeweils Individualdaten, die für den jeweiligen tragbaren Datenträger spezifisch sind, ohne äußere Vorgabe einer physikalischen Speicheradresse in den nichtflüchtigen Speicher des jeweiligen tragbaren Datenträgers geschrieben werden.

Mittels des erfindungsgemäßen Verfahrens können insbesondere als Chipkarten ausgebildete tragbare Datenträger mit Daten geladen werden.

Die Erfindung wird nachstehend anhand des in der Zeichnung dargestellten Ausführungsbeispiels erläutert, das sich auf das Einschreiben von Daten in eine JAVA Chipkarte bezieht.

### Es zeigen:

- Fig. 1: eine schematische Darstellung der Architektur einer Chipkarte,
- Fig. 2: ein Flußdiagramm für die Erzeugung eines Speicherabbilds eines nichtflüchtigen Speichers einer ersten Chipkarte,
- Fig. 3: ein Flußdiagramm zur Veranschaulichung der erfindungsgemäßen Vorgehensweise zur Initialisierung und Personalisierung weiterer Chipkarten mit Hilfe des Speicherabbilds und
- Fig. 4: ein Flußdiagramm einer Variante der erfindungsgemäßen Vorgehensweise zur Initialisierung und Personalisierung von Chipkarten

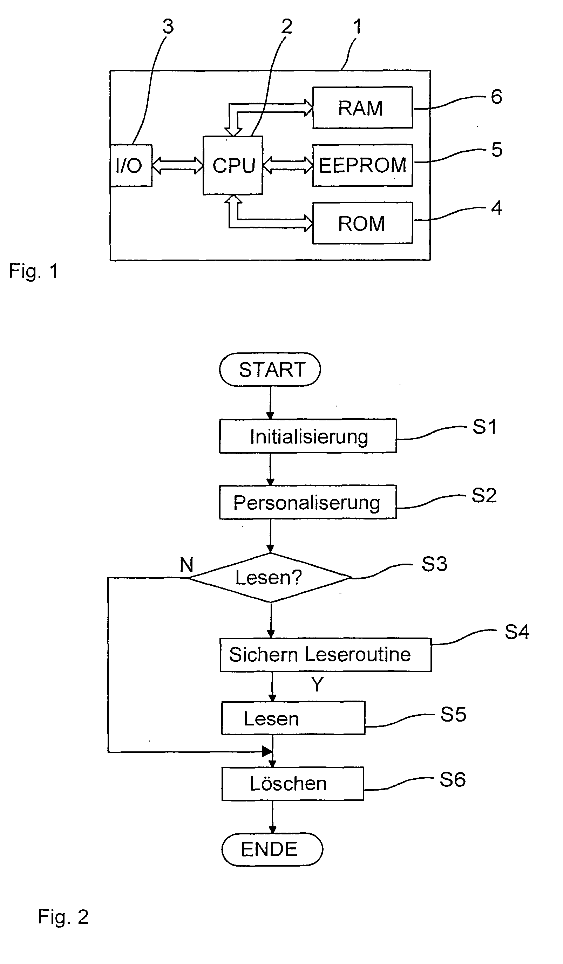

Fig.1 zeigt eine schematische Darstellung der Architektur einer Chipkarte 1, bei der das erfindungsgemäße Verfahren angewendet werden kann. Die Chipkarte 1 weist eine Steuereinheit 2 auf, die die Funktionsabläufe der Chipkarte 1 steuert. Die Steuereinheit 2 ist mit einer Ein-/Ausgabeeinheit 3, einem Permanentspeicher 4, einem nichtflüchtigen Speicher 5 und einem flüchtigen Speicher 6 verbunden.

Die Ein-/Ausgabeeinheit 3 dient der Kommunikation mit externen Geräten, die durch eine berührende Kontaktierung der Chipkarte 1 oder kontaktlos abgewickelt werden kann. Im Permanentspeicher 4 sind Daten abgelegt, die während der gesamten Lebensdauer der Chipkarte 1 unverändert erhalten bleiben. Dabei wird der Begriff Daten im Folgenden sehr allgemein im Sinne beliebiger Informationen unabhängig von deren Inhalt verwendet und es werden darunter beispielsweise Programme, Parameter, personenbezogene Angaben, Schlüssel usw. subsumiert. Insbesondere ist im Permanentspeicher 4 das Betriebssystem der Chipkarte 1 gespeichert. Der flüchtige Speicher 6 dient als Arbeitsspeicher für die Steuereinheit 2. Im flüchtigen Speicher 6 bleibt der Speicherinhalt nur solange erhalten, wie die Chipkarte 1 mit einer Betriebspannung versorgt wird. Der nichtflüchtige Speicher 5 kann während der Lebensdauer der Chipkarte 1 immer wieder neu beschrieben werden. Der jeweilige Speicherinhalt bleibt auch dann erhalten, wenn die Chipkarte 1 nicht mit der Betriebsspannung versorgt wird. Im nichtflüchtigen Speicher 5 sind beispielsweise Ergänzungen zum Betriebssystem, Anwendungssoftware, Schlüssel, personenbezogene Daten usw. abgelegt. Diese Daten werden vor der Auslieferung der Chipkarte 1 an den Kunden in den nichtflüchtigen Speicher 5 eingeschrieben und verwandeln die bis zu diesem Zeitpunkt lediglich mit einigen Grundfunktionen ausgestatte Chipkarte 1 in ein in der Regel höchst komplexes Produkt, das über sämtliche Funktionalitäten und Informationen für das jeweils vorgesehene Anwendungsspektrum verfügt. Dies hat zur Folge, daß in der Regel sehr große Datenmengen in den nichtflüchtigen Speicher 5 eingeschrieben werden müssen.

Wie im Folgenden noch näher erläutert wird, bezieht sich das erfindungsgemäße Verfahren auf dieses Einschreiben der Daten in den nichtflüchtigen Speicher 5 vor dem Ausliefern der Chipkarte 1 an den Kunden. Das Einschreiben erfolgt teils mit sehr hoher Geschwindigkeit im Rahmen einer Komplettierungsroutine während der Initialisierung der Chipkarte 1 und teils im Rahmen einer vergleichsweise langsamen Personalisierungsroutine, wobei es durch das erfindungsgemäße Verfahren ermöglicht wird, einen Großteil der Daten im Rahmen der Komplettierungsroutine einzuschreiben. Bei der Komplettierungsroutine werden die Daten unter äußerer Vorgabe der zugehörigen physikalischen Speicheradresse in den nichtflüchtigen Speicher 5 eingeschrieben. Dies bedeutet, daß nicht nur die Daten selbst sondern jeweils auch deren physikalische Speicheradresse an die Chipkarte 1 übermittelt werden. Aus diesem Grund werden vor der Durchführung der Komplettierungsroutine alle mit der Komplettierungsroutine einzuschreibenden Daten und deren physikalische Speicheradressen zu einem einzuschreibenden Speicherabbild zusammengestellt. Die Erzeugung des Speicherabbilds wird anhand von Fig. 2 erläutert.

Fig. 2 zeigt ein Flußdiagramm für die Erzeugung des Speicherabbilds. Das Speicherabbild braucht nur ein einziges Mal mit Hilfe einer ersten Chipkarte 1 erzeugt zu werden und kann dann in eine Vielzahl von weiteren Chipkarten 1 eingeschrieben werden. Dabei ist allerdings darauf zu achten, daß die erste Chipkarte 1 den Produktionsprozess nicht verläßt. Die erste Chipkarte 1 wird in einem Schritt S1 auf übliche Weise initialisiert, d.h. es wird insbesondere auch eine Komplettierungsroutine mit den üblicherweise dafür vorgesehenen Daten durchgeführt. Zusätzlich zu den üblichen Daten werden beim erfindungsgemäßen Verfahren mit der Komplettierungsroutine noch weitere Daten in den nichtflüchtigen Speicher 5 der ersten Chipkarte 1 eingeschrieben. Diese weiteren Daten repräsentieren eine Leseroutine zum Auslesen des nichtflüchtigen Speichers 5 der ersten Chipkarte 1, eine Rekonvertierungsroutine, einen Leseschlüssel und einen Ladeschlüssel, deren Bedeutung jeweils im Folgenden noch näher erläutert wird.

Statt der Leseroutine können die weiteren Daten auch lediglich für die Ausführung der Leseroutine zwingend benötigte Zusatzdaten enthalten. In diesem Fall ist die Leseroutine selbst bereits im Permanentspeicher 4 vorhanden und kann durch Kombination mit den Zusatzdaten ausgeführt werden. Sofern sie bereits im Permanentspeicher 4 vorhanden sind, sind auch die Schlüssel als weitere Daten für die Komplettierungsroutine entbehrlich. Schließlich enthalten die weiteren Daten für die Komplettierungsroutine ein Flag, das kenntlich macht, daß die Daten für einen gemäß der Erfindung abgewandelten Einschreibvorgang vorgesehen sind.

Um die vorstehend genannten weiteren Daten in den für die Komplettierung üblicherweise vorgesehenen Datensatz einfügen zu können, wird dieser zunächst entschlüsselt. Anschließend werden die Einfügungen vorgenommen und es erfolgt eine Verschlüsselung der Ergebnisse. Diese Zusammenstellung der Daten für die Komplettierung kann entweder im Rahmen des Produktionsablaufs erfolgen, innerhalb dessen die Komplettierungsroutine ausgeführt wird oder davon getrennt bereits zu einem früheren Zeitpunkt, so daß für den Produktionsablauf bereits die fertig aufbereiteten Daten zur Verfügung gestellt werden.

An Schritt S1 schließt sich ein Schritt S2 an, in dem eine Personalisierung der ersten Chipkarte 1 durchgeführt wird. Diese Personalisierung beschränkt sich allerdings auf das Einschreiben nur derjenigen Daten in den nichtflüchtigen Speicher 5 der ersten Chipkarte 1, die gleichermaßen für mehrere Chipkarten 1 vorgesehen sind und im folgenden als Allgemeindaten bezeichnet werden. Das Einschreiben erfolgt jeweils ohne äußere Vorgabe der physikalischen Speicheradresse. Als Allgemeindaten können auf diese Weise unter anderem allgemeine Personendaten, JAVA Packages, JAVA Applets usw. in den nichtflüchtigen Speicher 5 der ersten Chipkarte 1 eingeschrieben werden. Zweckmäßig werden weiter Schlüssel auf die Karte gebracht, die für im Rahmen der vorgesehenen Kartennutzungen anfallende kryptographische Berechnungen benötigt werden. Um mit dem erfindungsgemäßen Verfahren den größtmöglichen Nutzen zu erzielen, sollten möglichst alle Allgemeindaten im Schritt S2 in den nichtflüchtigen Speicher 5 der ersten Chipkarte 1 eingeschrieben werden. Lediglich kartenspezifische Individualdaten, die jeweils nur für eine einzige Chipkarte 1 vorgesehen sind, werden im Rahmen der Personalisierung gemäß Schritt S2 nicht eingeschrieben.

Die auf die Karten aufgebrachten Schlüssel, zweckmäßig auch die anderen auf die Chipkarte 1 gebrachten Daten, werden nicht im Klartext abgespeichert sondern verschleiert. Die Verschleierung erfolgt beispielsweise durch eine Transformation durch Verknüpfung mit Zufallswerten

Um das nachfolgende Einbringen der kartenspezifischen Individualdaten abzusichern, werden in Schritt S2 zusammen mit den Allgemeindaten zweckmäßig ferner weitere Schlüssel in den nichtflüchtigen Speicher 5 der Chipkarte 1 geschrieben. Diese weiteren Schlüssel werden dann beim Einbringen der kartenspezifischen Individualdaten für eine Verifikation bzw. eine gegenseitige Authentisierung herangezogen.

Nach der Personalisierung wird in einem sich anschließenden Schritt S3 geprüft, ob ein Auslesen des nichtflüchtigen Speichers 5 der ersten Chipkarte 1 mit der Leseroutine zulässig ist. Diese Prüfung kann so angelegt sein, daß der im nichtflüchtigen Speicher 5 oder im Permanentspeicher 4 abgelegte Leseschlüssel mit einem eingegebenen Wert verglichen wird. Wegen der hohen Sicherheitseinforderungen wird nur ein einziger Eingabeversuch zugelassen. Weiterhin kann beispielsweise anhand einer irreversibel zerstörbaren Leitungsverbindung geprüft werden, ob es sich um ein erstmaliges Auslesen des nichtflüchtigen Speichers 5 handelt.

Wenn die Prüfung zu einem positiven Ergebnis führt, d.h. wenn die Verifizierung des Leseschlüssels erfolgreich ist oder es sich um ein erstmaliges Auslesen handelt, schließt sich an Schritt S3 ein Schritt S4 an, in dem zum Schutz der Leseroutine im nichtflüchtigen Speicher 5 der ersten Chipkarte 1 befindliche Zustandsmarken und Daten, die nur zur Aktivierung, nicht aber zur laufenden Ausführung der Leseroutine benötigt werden, sowie eine gegebenenfalls vorgenommene Speicherreservierung gelöscht werden, so daß ein zukünftiger potentieller Mißbrauch der Leseroutine ausgeschlossen wird.

Unmittelbar vor der Ausgabe des ersten Datenblockes wird durch die Leseroutine desweiteren der interne Zustand der Chipkarte 1 auf einen Wert gesetzt, der demjenigen einer fabrikneuen Chipkarte entspricht. Für eine - mißbräuchliche - normale Verwendung müßte die Chipkarte 1 dann vollständig neu initialisiert werden. Eine normale Verwendung der Chipkarte 1 mit unveränderter Speicherbelegung wird daher sicher unterbunden.

Die Chipkarte 1 ist auf diese Weise auch dann gegen Mißbrauch gesichert, wenn während des Lesevorganges eine Stromunterbrechung auftritt. Weiterhin besteht die Möglichkeit, eine irreversible Unterbrechung einer Leitungsverbindung vorzunehmen, durch die sich zweifelsfrei feststellen läßt, daß die Leseroutine bereits ausgeführt wurde.

Auf den Sicherungsschritt S4 folgt ein Schritt S5, in dem der nichtflüchtige Speicher 5 der ersten Chipkarte 1 ausgelesen wird. Dabei wird jeweils beginnend mit einer definierten physikalischen Speicheradresse ein definierter Teilbereich des nichtflüchtigen Speichers 5 ausgelesen und in einen Puffer innerhalb der ersten Chipkarte 1 geschrieben. Der so ermittelte Speicherinhalt wird mit der physikalischen Speicheradresse kombiniert und mit Hilfe des dafür im Permanentspeicher 4 oder im nichtflüchtigen Speicher 5 der ersten Chipkarte 1 abgelegten Ladeschlüssels verschlüsselt. Danach wird die so erzeugte verschlüsselte Datensequenz an die Ein-/ Ausgabeeinheit 3 der ersten Chipkarte 1 weitergeleitet und an eine externe Personalisierungseinrichtung ausgegeben. Anschließend wird in gleicher Weise ein weiterer Teilbereich des nichtflüchtigen Speichers 5 beginnend von einer höheren physikalischen Speicheradresse ausgelesen.

Diese Vorgehensweise wird so oft wiederholt, bis der gesamte Inhalt des nichtflüchtigen Speichers 5 ausgelesen ist. Zweckmäßig werden Transaktionszähler dabei weggelassen. Ebenfalls weggelassen werden leere Bereiche, die auf den weiteren zu personalisierenden Chipkarten 1 aufgrund eines für diese ausgeführten Löschkommandos bereits richtig belegt sind.

Alle ausgelesenen Daten werden in mit dem Ladeschlüssel verschlüsselter Form an die Personalisierungseinrichtung übertragen. Ausgelesene Geheimdaten, insbesondere auch die Implementierung der Leseroutine sowie die für die Ausführung der Leseroutine zwingend benötigten Zusatzdaten werden jeweils durch einen vorgegebenen Wert ersetzt oder gar nicht erst ausgegeben, um ein Ausspähen zu verhindern.

In der externen Personalisierungseinrichtung werden die empfangenen verschlüsselten Datensequenzen zu dem Speicherabbild zusammengesetzt. Hierbei müssen die Datensequenzen nicht entschlüsselt werden, sondern können in einer Form abgelegt werden, die direkt zum Laden in weitere Chipkarten verwendet werden kann.

Zur wirksamen Mißbrauchsvermeidung kann dem Auslesen ein Schritt S6 nachgeschaltet sein, in dem die Leseroutine physikalisch gelöscht wird.

Mit dem Schritt S6 ist der Durchlauf des Flußdiagramms beendet. Zum Schritt S5 gelangt man auch direkt von Schritt S3, wenn die dortige Prüfung zu einem negativen Ergebnis führt.

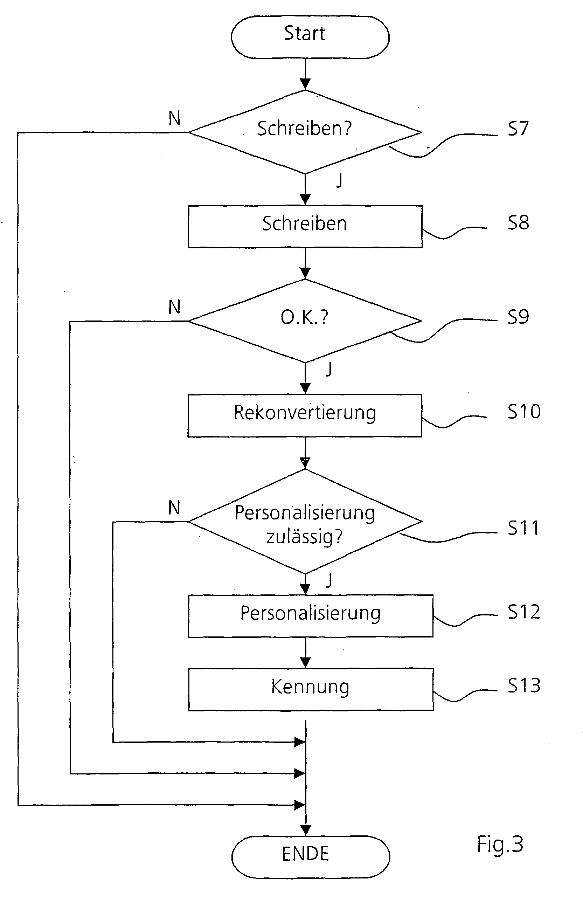

Das mit dem in Fig. 2 dargestellten Ablauf erzeugte Speicherabbild des nichtflüchtigen Speichers 5 der Chipkarte 1 wird auf eine Vielzahl weiterer Chipkarten 1 übertragen, in die danach zur vollständigen Fertigstellung der Personalisierung nur noch einige wenige Individualdaten eingeschrieben werden. Diese Vorgehensweise ist in Fig. 3 dargestellt.

Fig. 3 zeigt ein Flußdiagramm zur Veranschaulichung der erfindungsgemäßen Vorgehensweise zur Initialisierung und Personalisierung weiterer Chipkarten 1 mit Hilfe des Speicherabbilds. Im Gegensatz zu Fig. 2 wird diese Vorgehensweise nicht bei der ersten Chipkarte 1, sondern bei einer Vielzahl von weiteren Chipkarten 1 angewendet, die auf diese Weise mit allen für die spätere Verwendung der Chipkarte 1 benötigten Daten versehen werden.

Der Darchlauf des Flußdiagramns wird mit einem Schritt S7 gestartet, in dem geprüft wird, ob ein Einschreiben des Speicherabbilds in den nichtflüchtigen Speicher 5 der Chipkarte 1 zulässig ist. Dies kann ähnlich wie bei dem in Fig. 2 dargestellten Auslesen des nichtflüchtigen Speichers 5 zur Erzeugung des Speicherabbilds beispielsweise vom Ergebnis einer Schlüsselverifikation oder vom Zustand einer irreversibel zerstörbaren Leitungsverbindung abhängig gemacht werden. Falls ein Einschreiben nicht zugelassen wird, wird keine Personalisierung durchgeführt und der Durchlauf des Flußdiagramms ist beendet.

Anderenfalls wird mit einem Schritt S8 fortgefahren, in dem das Speicherabbild unter Vorgabe von physikalischen Speicheradressen in den nichtflüchtigen Speicher 5 der Chipkarte 1 eingeschrieben wird. Dieses Einschreiben erfolgt im Rahmen der Durchführung der Komplettierungsroutine. Beim Einschreiben wird das in der Personalisierungseinrichtung mit dem Ladeschlüssel verschlüsselte Speicherabbild in der Chipkarte 1 Datensequenz für Datensequenz mit dem Ladeschlüssel wieder entschlüsselt und an die jeweils vorgesehene physikalische Speicheradresse im nichtflüchtigen Speicher 5 geschrieben.

Auf Schritt S8 folgt ein Schritt S9, in dem geprüft wird, ob das Speicherabbild fehlerfrei in den nichtflüchtigen Speicher 5 eingeschrieben wurde. Wird dabei ein Fehler festgestellt, so wird die Bearbeitung abgebrochen, der Durchlauf des Flußdiagrammes beendet.

Ist das Ergebnis der Prüfung in Schritt S9 positiv, werden an der Chipkarte 1 ein "RESET" und ein "REBOOT" durchgeführt. Anschließend wird in einem Schritt S10 die mit dem Speicherabbild in den nichtflüchtigen Speicher 5 eingeschriebene Rekonvertierungsroutine gestartet.

Die Rekonvertierungsroutine ist für das erfindungsgemäße Verfahren von wesentlicher Bedeutung. Alle für den weiteren Personalisierungsprozeß benötigten Schlüssel, d.h. ebenso Schlüssel an bekannten Positionen wie etwa Schlüssel z.B. in Java-Objekten, die bei der vorhergehenden Personalisierung dynamisch angelegt wurden, werden bei der Rekonvertierung an die zu personalisierende Chipkarte 1 angepaßt. Die Rekonvertierung ermöglicht es, daß die Chipkarte 1 mit den Daten des Speicherabbildes im nichtflüchtigen Speicher 5 für die weitere, die Karte individualisierende Personalisierung genutzt werden kann. Für die Durchführung der Rekonvertierung ist es erforderlich, daß das vollständige Speicherabbild in unverschlüsselter Form im nichtflüchtigen Speicher 5 vorliegt. Im Rahmen der Rekonvertierung wird der Speicherinhalt des nichtflüchtigen Speichers 5 der Chipkarte 1 chipindividuell aufgearbeitet, d.h. mehrere Chipkarten 1, in deren nichtflüchtige Speicher 5 das gleiche Speicherabbild eingeschrieben wurde, unterscheiden sich nach der Rekonvertierung bezüglich ihrer Speicherbelegung. Die für die Rekonvertierung benötigten Funktionalitäten und Adressinformationen sind im Permanentspeicher 4 und/ oder im nichtflüchtigen Speicher 5 abgelegt. Die tatsächliche Durchführung der Rekonvertierung erfolgt durch die in den nichtflüchtigen Speicher 5 eingeschriebene Rekonvertierungsroutine.

Bereits bei der Initialisierung der Chipkarte 1 oder aber im Rahmen der Rekonvertierung werden Tabellen mit chipindividuellen Zufallszahlen generiert und gespeichert. Mit diesen chipindividuellen Zufallszahlen werden alle mit den Zufallswerten der ersten Chipkarte, von der die Daten gemäß dem Flußdiagramm nach Fig. 2 an die Personalisierungseinrichtung übertragen wurden, verschleierten Elemente, d.h. in der Regel insbesondere die für innerhalb der vorgesehenen Kartennutzungen vorzunehmende kryptographische Berechnungen benötigten Schlüssel, umgeschlüsselt, so daß die Elemente in auf die Chipkarte 1 abgestimmter, verschleierter Form vorliegen. Für die Umschlüsselung werden die verschleierten Elemente unter Verwendung der für die Chipkarte 1 individuellen Zufallszahlen einer Transformation unterworfen, welche bewirkt, daß die Elemente in von der Chipkarte 1 vorgenommenen Berechnungen, die auf den in der Chipkarte 1 gültigen Zufallszahlen beruhen, benutzbar sind. Beispielsweise wird ein aus einem Grundschlüsselsatz k durch Verschleierung mit einem, wenigstens eine Zufallszahl enthaltenden Zufallszahlensatz Z1 erzeugter, verschleierter Schlüsselsatz k' auf der Chipkarte 1 transformiert in einen Schlüsselsatz k", der in Verbindung mit einem, ebenfalls wenigstens eine Zufallszahl enthaltenden Zufallszahlensatz Z2 der Chipkarte 1 für alle von der Chipkarte 1 auszuführenden kryptographischen Berechungen verwendet wird.

Im Anschluß an Schritt S10 wird die die Chipkarte individualisierende Personalisierung gestartet. Hierzu wird zunächst in einem Schritt S11 überprüft, ob eine weitere Ergänzung des im nichtflüchtigen Speicher 5 liegenden, rekonvertierten Speicherabbildes zulässig ist.

Die Zulässigkeit setzt die erfolgreiche Durchführung einer Schlüsselverifikation sowie einer gegenseitigen Authentisierung zwischen Chipkarte 1 und Personalisierungseinrichtung voraus. Für die Prüfung werden die Schlüssel verwendet, die beim Einbringen der Allgemeindaten in Schritt S2 von der Personalisierungseinrichtung in den nichtflüchtigen Speicher 5 gebracht, im nachfolgenden Schritt S5 in das Speicherabbild übernommen, anschließend mit dem Speicherabbild in den nichtflüchtigen Speicher 5 der herzustellenden Chipkarte 1 geschrieben und im Zuge der chipindividuellen Rekonvertierung des Speicherabbildes in Schritt S10 mit den Schlüsselinhalten wieder harmonisiert wurden.

Nach Schritt S11 wird ein Schritt S12 ausgeführt, in dem die Chipkarte 1 individuell personalisiert wird. Hierbei werden Individualdaten wie beispielsweise personenbezogene Daten ohne äußere Vorgabe der physikalischen Speicheradresse in den nichtflüchtigen Speicher 5 der Chipkarte 1 eingeschrieben. Der Umfang dieser Individualdaten ist in der Regel sehr viel geringer als der mit Hilfe des Speicherabbilds eingeschriebenen Allgemeindaten. Das Einschreiben der Individualdaten kann so erfolgen, das die logische Strukturierung des nichtflüchtigen Speichers 5 nicht mehr verändert wird, sondern lediglich die konkreten Inhalte einiger Speicherplätze. Dies kann beispielsweise dadurch geschehen, daß die Individualdaten im Speicherabbild vorgesehene Platzhalter ersetzen.

An Schritt S12 schließt sich ein Schritt S13 an, in dem in der Chipkarte 1 eine Kennung gesetzt wird, daß die Personalisierung erfolgreich abgeschlossen wurde. Der Durchlauf des Flußdiagramms ist damit beendet.

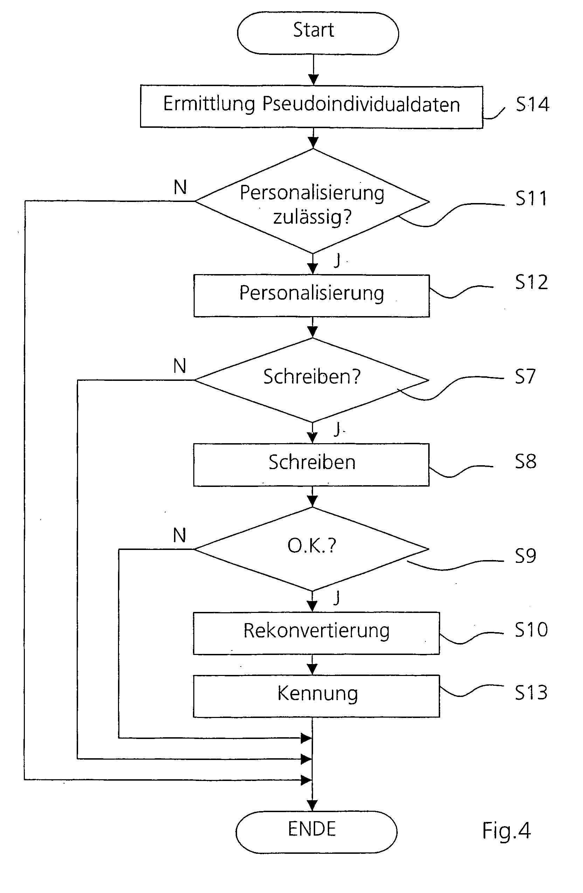

Sofern die Sicherheitsanforderungen an den Personalisierungsprozeß und die Struktur der Personalisierung dies zulassen, kann in einer Variante des vorbeschriebenen Verfahrens vorgesehen sein, auch die Ausführung des Schrittes S12 prinzipiell vollständig in die Personalisierungseinrichtung zu verlagern und dort vor dem Schreiben, d.h. vor der Ausführung der Schritte S7 und S8 auszuführen. Die zur Personalisierung einer Chipkarte 1 benötigte Zeit läßt sich dadurch weiter reduzieren. Eine mögliche Schrittfolge bei dieser Variante ist in Fig.4 veranschaulicht.

Bei der Personalisierung der Chipkarte 1 im Schritt S2 werden hierbei in den nichtflüchtigen Speicher 5 Pseudoindividualdaten eingeschrieben, welche als Platzhalter für die nachfolgend in Schritt S12 aufzubringenden kartenspezifischen Individualdaten dienen. Die Pseudoindividualdaten sind zweckmäßig als solche leicht erkennbar und haben etwa die Struktur "NUMMER1", die später durch eine konkrete, individuelle Zahl, z.B. "0123456", zu ersetzen ist.

Die bei der Durchführung des Schrittes S5 ausgelesenen und an die Personalisierungseinrichtung übertragenen Daten werden dort entschlüsselt, um in einem Schritt S14 die Positionen der mit Pseudoindividualdaten belegten Felder zu ermitteln.

Die ermittelten Pseudoindividualdatenfelder werden sodann in der Personalisierungseinrichtung mit für die zu personalisierende Chipkarte 1 spezifischen Individualdaten belegt. Hierzu erfolgt in der Personalisierungseinrichtung analog zu Schritt S11 eine Prüfung, ob der Personalisierungsschritt S 12 durchgeführt werden darf. Anschließend werden die kartenspezifischen Individualdaten auf die Platzhalter geschrieben. Der resultierende Datensatz wird sodann, nach Prüfung der Zulässigkeit gemäß Schritt S7, in einem Schreibvorgang S8 auf die Chipkarte 1 übertragen. Für die Übertragung werden die Daten zweckmäßig wieder durch Verschlüsselung mit einem, zu einem auf der Chipkarte 1 befindlichen, korrespondierenden Ladeschlüssel gesichert.

Nachfolgend wird der auf die Chipkarte 1 gebrachte Datensatz, nach Entschlüsselung der Daten mit dem Ladeschlüssel, einer Rekonvertierung gemäß Schritt S10 unterzogen. Die Rekonvertierung erfolgt in der gleichen Weise wie weiter oben beschrieben.

Eine nachgeschaltete besondere Personalisierung gemäß Schritt S 12 ist grundsätzlich nicht mehr erforderlich. Allerdings kann es aufgrund der Art der kartenspezifischen Individualdaten vorkommen, daß sich ein Teil der Individualdaten für eine Einbringung mit Hilfe von Pseudoindividualdaten grundsätzlich nicht eignet. Beispielsweise gilt das für Daten, die auf der Verknüpfung einer kartenspezifischen Zufallszahl mit Individualdaten beruhen. Solche Daten können erst nach der Rekonvertierung angelegt werden. In einem solchen Fall ist der Rekonvertierung in Schritt S10 noch ein zusätzlicher Personalisierungsschritt nach Art des Schrittes S12 nachgelagert, in dem die in der Personalisierungseinrichtung nicht einarbeitbaren Daten auf die Chipkarte 1 gebracht werden.

Als Abwandlung zu vorstehend beschriebener Variante kann die Nutzung einer Verschlüsselungstechnik vorgesehen sein, die es zuläßt die Ermittlung der Pseudoindividualdatenfelder in der Personalisierungseinrichtung auch ohne vollständinge Entschlüsselung der übertragenen Daten durchzuführen. Dann werden wie zuvor die Pseudoindividualdatenfelder ermittelt, allerdings ohne daß zuvor eine Entschlüsselung sämtlicher Daten erfolgt, und mit für die zu personalisierende Chipkarte 1 spezifischen Individualdaten belegt. Die belegten Felder werden anschließend mit dem Ladeschlüssel verschlüsselt. Der danach vorliegende gesamte, verschlüsselte Datensatz wird sodann in Schritt S8 auf die Chipkarte 1 geschrieben, wo er entschlüsselt und nachfolgend einer Rekonvertierung unterworfen wird.

## Patentansprüche

1. Verfahren zum Laden von tragbaren Datenträgern (1) mit Daten, wobei
- für mehrere tragbare Datenträger (1) identische Allgemeindaten ohne äußere Vorgabe physikalischer Speicheradressen in einen nichtflüchtigen Speicher (5) eines ersten tragbaren Datenträgers (1) eingeschrieben werden,
- ein Speicherinhalt wenigstens eines Teilbereichs des nichtflüchtigen Speichers (5) des ersten tragbaren Datenträgers (1) ausgelesen wird und unter Einbeziehung der zugehörigen physikalischen Speicheradressen ein Speicherabbild für diesen Teilbereich erzeugt wird,
- das Speicherabbild unter Verwendung der zugehörigen physikalischen Speicheradressen in nichtflüchtige Speicher (5) weiterer tragbarer Datenträger (1) eingeschrieben wird,
**dadurch gekennzeichnet, daß** jeweils nach dem Einschreiben des Speicherabbilds in den nichtflüchtigen Speicher (5) eines der weiteren tragbaren Datenträger (1) von diesem weiteren tragbaren Datenträger (1) eine Rekonvertierungsroutine zur Rekonvertierung des mit dem Speicherabbild geladenen nichtflüchtigen Speichers (5) ausgeführt wird, in deren Rahmen alle innerhalb des Speicherabbildes übertragenen, verschleierten Elemente, insbesondere Schlüssel für kryptographische Berechnungen im Rahmen vorgesehener Nutzungen, umgeschlüsselt werden, so daß die Elemente in auf die Chipkarte (1) abgestimmter, verschleierter Form vorliegen, und daß nach der Rekonvertierung jeweils Individualdaten, die für den jeweiligen tragbaren Datenträger (1) spezifisch sind, ohne äußere Vorgabe einer physikalischen Speicheradresse in den nichtflüchtigen Speicher (5) des jeweiligen tragbaren Datenträgers (1) geschrieben werden.

2. Verfahren nach Anspruch 1, **dadurch gekennzeichnet, daß** im Rahmen der Rekonvertierung eine Verschleierung eines Schlüssels (k') auf Basis einer Zufallszahl (Z1) überführt wird in eine Verschleierung auf Basis einer für den Datenträger (1) individuellen Zufallszahl (Z2).

3. Verfahren nach Anspruch 1, **dadurch gekennzeichnet, daß** als Allgemeindaten Anwendungssoftware, insbesondere JAVA Packages und JAVA Applets in den nichtflüchtigen Speicher (5) des ersten tragbaren Datenträgers (1) eingeschrieben werden.

4. Verfahren nach einem der vorhergehenden Ansprüche, **dadurch gekennzeichnet, daß** im Rahmen einer Initialisierung des ersten tragbaren Datenträgers (1) eine Leseroutine zum Auslesen des nichtflüchtigen Speichers (5) oder für die Ausführung der Leseroutine zwingend benötigte Zusatzdaten in den nichtflüchtigen Speicher (5) des ersten tragbaren Datenträgers (1) eingeschrieben werden.

5. Verfahren nach einem der vorhergehenden Ansprüche, **dadurch gekennzeichnet, daß** im Rahmen der Initialisierung des ersten tragbaren Datenträgers (1) die Rekonvertierungsroutine in den nichtflüchtigen Speicher (5) des ersten tragbaren Datenträgers (1) eingeschrieben wird.

6. Verfahren nach einem der vorhergehenden Ansprüche, **dadurch gekennzeichnet, daß** der Speicherinhalt des nichtflüchtigen Speichers (5) des ersten tragbaren Datenträgers (1) nur dann ausgelesen wird, wenn zuvor eine Sicherheitsprüfung erfolgreich durchgeführt wurde.

7. Verfahren nach einem der vorhergehenden Ansprüche, **dadurch gekennzeichnet, daß** der aus dem nichtflüchtigen Speicher (5) des ersten tragbaren Datenträgers (1) ausgelesene Speicherinhalt verschlüsselt wird.

8. Verfahren nach einem der vorhergehenden Ansprüche, **dadurch gekennzeichnet, daß** die Erzeugung des Speicherabbilds des nichtflüchtigen Speichers (5) des ersten tragbaren Datenträgers (1) nur einmal zugelassen wird.

9. Verfahren nach einem der Ansprüche 4 bis 7, **dadurch gekennzeichnet, daß** die Leseroutine zum Auslesen des nichtflüchtigen Speichers (5) des ersten tragbaren Datenträgers (1) oder die für die Ausführung der Leseroutine zwingend benötigten Zusatzdaten nach der Erzeugung des Speicherabbilds gelöscht werden.

10. Verfahren nach einem der vorhergehenden Ansprüche, **dadurch gekennzeichnet, daß** das Speicherabbild jeweils vor dem Einschreiben in die nichtflüchtigen Speicher (5) der weiteren tragbaren Datenträger (1) entschlüsselt wird.

11. Verfahren nach einem der vorhergehenden Ansprüche, **dadurch gekennzeichnet, daß** die Rekonvertierung der nichtflüchtigen Speicher (5) der weiteren tragbaren Datenträger (1) jeweils datenträgerspezifisch durchgeführt wird.

12. Verfahren nach einem der vorhergehenden Ansprüche, **dadurch gekennzeichnet, daß** im Rahmen der Rekonvertierung der nichtflüchtigen Speicher (5) der weiteren tragbaren Datenträger (1) Zufallszahlen erzeugt und gespeicherte Daten verschlüsselt werden.

13. Verfahren zum Laden von tragbaren Datenträgern (1) mit Daten, wobei
- für mehrere tragbare Datenträger (1) identische Allgemeindaten ohne äußere Vorgabe physikalischer Speicheradressen in einen nichtflüchtigen Speicher (5) eines ersten tragbaren Datenträgers (1) eingeschrieben werden,
- ein Speicherinhalt wenigstens eines Teilbereichs des nichtflüchtigen Speichers (5) des ersten tragbaren Datenträgers (1) ausgelesen und unter Einbeziehung der zugehörigen physikalischen Speicheradressen ein Speicherabbild für diesen Teilbereich erzeugt wird,
**dadurch gekennzeichnet, daß** neben den Allgemeindaten Pseudoindividualdaten in den Speicher (5) geschrieben werden, diese nach dem Auslesen in dem Speicherabbild ermittelt und mit für einen zu personalisierenden Datenträger (1) spezifischen Individualdaten überschrieben werden, das danach vorliegende, personalisierte Speicherabbild in den nichtflüchtigen Speicher (5) eines zu personalisierenden tragbaren Datenträgers (1) eingeschrieben wird, und jeweils nach dem Einschreiben in den nichtflüchtigen Speicher von dem tragbaren Datenträger (1) eine Rekonvertierungsroutine zur Rekonvertierung des mit dem Speicherabbild geladenen nichtflüchtigen Speichers (5) ausgeführt wird, in deren Rahmen alle innerhalb des Speicherabbildes übertragenen verschleierten Elemente, insbesondere Schlüssel für kryptographische Berechnungen im Rahmen vorgesehener Nutzungen, umgeschlüsselt werden, so daß die Elemente in auf den tragbaren Datenträger (1) abgestimmter, verschleierter Form vorliegen, und daß nach der Rekonvertierung jeweils Individualdaten, die für den jeweiligen tragbaren Datenträger (1) spezifisch sind, ohne äußere Vorgabe einer physikalischen Speicheradresse in den nichtflüchtigen Speicher (5) des jeweiligen tragbaren Datenträgers (1) geschrieben werden.

14. Verfahren nach einem der vorhergehenden Ansprüche, **dadurch gekennzeichnet, daß** als Chipkarten ausgebildete tragbare Datenträger (1) mit Daten geladen werden.

## Claims

1. A method for loading portable data carriers (1) with data, wherein
- for a plurality of portable data carriers (1), identical general data are written to a non-volatile memory (5) of a first portable data carrier (1) without external specification of physical memory addresses,
- memory contents of at least a partial area of the non-volatile memory (5) of the first portable data carrier (1) are read out and a memory image is generated for said partial area while including the associated physical memory addresses,
- the memory image is written to non-volatile memories (5) of further portable data carriers (1) while using the associated physical memory addresses, **characterized in that** after the writing of the memory image to the non-volatile memory (5) of one of the further portable data carriers (1) in each case a reconversion routine is executed by said further portable data carrier (1) for reconverting the non-volatile memory (5) loaded with the memory image during which routine all disguised elements transmitted within the memory image, in particular keys for cryptographic computations in intended uses, are transencrypted so that the elements are present in a disguised form coordinated with the chip card (1), and, after the reconversion, individual data specific to the particular portable data carrier (1) are in each case written to the non-volatile memory (5) of the particular portable data carrier (1) without external specification of a physical memory address.

2. The method according to claim 1, **characterized in that** during the reconversion, a disguising of a key (k') on the basis of a random number (Z1) is converted to a disguising on the basis of a random number (Z2) individual to the data carrier (1).

3. The method according to claim 1, **characterized in that** the general data written to the non-volatile memory (5) of the first portable data carrier (1) are application software, in particular JAVA packages and JAVA applets.

4. The method according to any of the preceding claims, **characterized in that** during an initialization of the first portable data carrier (1) a reading routine for reading out the non-volatile memory (5) or additional data necessarily required for executing the reading routine are written to the non-volatile memory (5) of the first portable data carrier (1).

5. The method according to any of the preceding claims, **characterized in that** during the initialization of the first portable data carrier (1) the reconversion routine is written to the non-volatile memory (5) of the first portable data carrier (1).

6. The method according to any of the preceding claims, **characterized in that** the memory contents of the non-volatile memory (5) of the first portable data carrier (1) are read out only when a security check was previously carried out successfully.

7. The method according to any of the preceding claims, **characterized in that** the memory contents read out of the non-volatile memory (5) of the first portable data carrier (1) are encrypted.

8. The method according to any of the preceding claims, **characterized in that** the generation of the memory image of the non-volatile memory (5) of the first portable data carrier (1) is permitted only once.

9. The method according to any of claims 4 to 7, **characterized in that** the reading routine for reading out the non-volatile memory (5) of the first portable data carrier (1) or the additional data necessarily required for executing the reading routine are deleted after generation of the memory image.

10. The method according to any of the preceding claims, **characterized in that** the memory image is decrypted in each case before the writing to the non-volatile memories (5) of the further portable data carriers (1).

11. The method according to any of the preceding claims, **characterized in that** the reconversion of the non-volatile memories (5) of the further portable data carriers (1) is carried out in each case in data carrier-specific fashion.

12. The method according to any of the preceding claims, **characterized in that** random numbers are generated and stored data are encrypted during the reconversion of the non-volatile memories (5) of the further portable data carriers (1).

13. A method for loading portable data carriers (1) with data, wherein
- for a plurality of portable data carriers (1), identical general data are written to a non-volatile memory (5) of a first portable data carrier (1) without external specification of physical memory addresses,
- memory contents at least of a partial area of the non-volatile memory (5) of the first portable data carrier (1) are read out and a memory image is generated for said partial area while including the associated physical memory addresses, **characterized in that**, besides the general data, pseudo-individual data are written to the memory (5), the latter are determined in the memory image after readout and overwritten with individual data specific to a data carrier (1) to be personalized, the subsequently present personalized memory image is written to the non-volatile memory (5) of a portable data carrier (1) to be personalized, and after the writing to the non-volatile memory a reconversion routine is executed in each case by the portable data carrier (1) for reconverting the non-volatile memory (5) loaded with the memory image, during which routine all disguised elements transmitted within the memory image, in particular keys for cryptographic computations in intended uses, are transencrypted so that the elements are present in a disguised form coordinated with the portable data carrier (1), and, after the reconversion, individual data specific to the particular portable data carrier (1) are in each case written to the non-volatile memory (5) of the particular portable data carrier (1) without external specification of a physical memory address.

14. The method according to any of the preceding claims, **characterized in that** portable data carriers (1) configured as chip cards are loaded with data.

## Revendications

1. Procédé de chargement de supports de données portables avec des données (1),
■ des données générales identiques étant enregistrées pour plusieurs supports de données portables (1) dans une mémoire non volatile (5) d'un premier support de données portable (1) sans spécification extérieure d'adresses mémoires physiques,
■ un contenu de mémoire d'au moins une zone partielle de la mémoire non volatile (5) du premier support de données portable (1) étant lu et une image mémoire étant générée pour cette zone partielle en intégrant les adresses mémoires physiques correspondantes.
■ l'image mémoire étant écrite dans des mémoires non volatiles (5) d'autres supports de données portables (1) en utilisant les adresses mémoires physiques correspondantes,
**caractérisé en ce que**, respectivement après l'écriture de l'image mémoire dans la mémoire non volatile (5) d'un des autres supports de données portables (1), une routine de reconversion est exécutée par cet autre support de données portable (1) pour la reconversion de la mémoire non volatile (5) chargée de l'image mémoire, routine de reconversion dans le cadre de laquelle tous les éléments masqués transmis à l'intérieur de l'image mémoire, notamment des clés pour calculs cryptographiques dans le cadre d'utilisations prévues, sont recryptés, de telle sorte que les éléments se trouvent sous forme masquée accordée à la carte à puce (1), et que respectivement des données individuelles spécifiques pour le support de données portable (1) respectif sont écrites après la reconversion dans la mémoire non volatile (5) du support de données portable (1) respectif sans spécification extérieure d'une adresse mémoire physique.

2. Procédé selon la revendication 1, **caractérisé en ce que**, dans le cadre de la reconversion, un masquage d'une clé (k') sur la base d'un nombre aléatoire (Z1) est transformé en un masquage sur la base d'un nombre aléatoire (Z2) individuel pour le support de données (1).

3. Procédé selon la revendication 1, **caractérisé en ce que** du logiciel d'application, notamment JAVA Packages et JAVA Applets, est écrit dans la mémoire non volatile (5) du premier support de données portable (1) en tant que données générales.

4. Procédé selon une des revendications précédentes, **caractérisé en ce que**, dans le cadre d'une initialisation du premier support de données portable (1), une routine de lecture pour la lecture de la mémoire non volatile (5) ou des données supplémentaires impérativement nécessaires pour l'exécution de la routine de lecture sont écrites dans la mémoire non volatile (5) du premier support de données portable (1).

5. Procédé selon une des revendications précédentes, **caractérisé en ce que**, dans le cadre de l'initialisation du premier support de données portable (1), la routine de reconversion est écrite dans la mémoire non volatile (5) du premier support de données portable (1).

6. Procédé selon une des revendications précédentes, **caractérisé en ce que** le contenu de mémoire de la mémoire non volatile (5) du premier support de données portable (1) n'est lu que quand un examen de sécurité a été auparavant effectué avec succès.

7. Procédé selon une des revendications précédentes, **caractérisé en ce que** le contenu de mémoire lu à partir de la mémoire non volatile (5) du premier support de données portable (1) est crypté.

8. Procédé selon une des revendications précédentes, **caractérisé en ce que** la génération de l'image mémoire de la mémoire non volatile (5) du premier support de données portable (1) n'est autorisée qu'une seule fois.

9. Procédé selon une des revendications de 4 à 7, **caractérisé en ce que** la routine de lecture pour la lecture de la mémoire non volatile (5) du premier support de données portable (1) ou les données supplémentaires impérativement nécessaires pour l'exécution de la routine de lecture sont effacées après génération de l'image mémoire.

10. Procédé selon une des revendications précédentes, **caractérisé en ce que** l'image mémoire est respectivement décryptée avant l'écriture dans la mémoire non volatile (5) de l'autre support de données portable (1).

11. Procédé selon une des revendications précédentes, **caractérisé en ce que** la reconversion des mémoires non volatiles (5) des autres supports de données portables (1) est exécutée spécifiquement au support de données respectif.

12. Procédé selon une des revendications précédentes, **caractérisé en ce que**, dans le cadre de la reconversion des mémoires non volatiles (5) des autres supports de données portables (1), des nombres aléatoires sont générés et des données mémorisées sont cryptées.

13. Procédé de chargement de supports de données portables avec des données (1),
■ des données générales identiques étant enregistrées pour plusieurs supports de données portables (1) dans une mémoire non volatile (5) d'un premier support de données portable (1) sans spécification extérieure d'adresses mémoires physiques,
■ un contenu de mémoire d'au moins une zone partielle de la mémoire non volatile (5) du premier support de données portable (1) étant lu et une image mémoire étant générée pour cette zone partielle en intégrant les adresses mémoires physiques correspondantes.
**caractérisé en ce que**, outre les données générales, des données pseudo-individuelles sont écrites dans la mémoire (5) puis relevées dans l'image mémoire après la lecture et écrasées par des données individuelles spécifiques pour un support de données (1) devant être personnalisé, l'image mémoire personnalisée ainsi obtenue est écrite dans la mémoire non volatile (5) d'un support de données portable (1) devant être personnalisé, et une routine de reconversion est exécutée par le support de données portable (1) respectivement après l'écriture dans la mémoire non volatile pour la reconversion de la mémoire non volatile (5) chargée de l'image mémoire, routine de reconversion dans le cadre de laquelle tous les éléments masqués transmis à l'intérieur de l'image mémoire, notamment des clés pour calculs cryptographiques dans le cadre d'utilisations prévues, sont recryptés, de telle sorte que les éléments se trouvent sous forme masquée accordée au support de données portable (1), et que respectivement des données individuelles spécifiques pour le support de données portable (1) respectif sont écrites après la reconversion dans la mémoire non volatile (5) du support de données portable (1) respectif sans spécification extérieure d'une adresse mémoire physique.

14. Procédé selon une des revendications précédentes, **caractérisé en ce que** des supports de données portables (1) réalisés sous forme cartes à puce sont chargés de données.
